# EUROPÄISCHE PATENTSCHRIFT

(11) **EP 2 860 220 B1**
(45) Veröffentlichungstag und Bekanntmachung des Hinweises auf die Patenterteilung: **25.05.2016**
(21) Anmeldenummer: 14185392.9
(22) Anmeldetag: 18.09.2014
(51) Int. Cl.: C08L 77/02

(54) **Formmasse auf Basis eines teilaromatischen Copolyamids**
Moulding material on the basis of a partially aromatic copolyamide
Masse de moulage à base d'un copolyamide partiellement aromatique

(30) Priorität: 20.09.2013 DE 102013218964
(43) Veröffentlichungstag der Anmeldung: 15.04.2015
(73) Patentinhaber: Evonik Degussa GmbH, 45128 Essen (DE)
(72) Erfinder: Nitsche, Jasmin, 44141 Dortmund (DE); Häger, Harald, 59348 Lüdinghausen (DE); Geerkens, Sebastian, 47802 Krefeld (DE); Baumann, Franz-Erich, 48249 Dülmen (DE); Beuth, Reinhard, 45772 Marl (DE)

(56) Entgegenhaltungen:
- EP-A1- 1 988 113
- EP-A1- 2 325 260

## Beschreibung

Gegenstand der Erfindung ist eine schlagzähmodifizierte Polyamidformmasse, die ein teilaromatisches Copolyamid sowie einen polyolefinischen Schlagzähmodifier enthält und die aufgrund der Wahl der einzelnen Bestandteile eine hohe Schlagzähigkeit und Reißdehnung sowie eine hohe Wärmealterungsbeständigkeit besitzt. Die daraus hergestellten Formteile sind ebenfalls Gegenstand der Erfindung.

Bekannte Standardpolyamide wie PA6 und PA66 lassen sich leicht verarbeiten und haben hohe Schmelzpunkte und hohe Wärmeformbeständigkeiten, insbesondere wenn sie mit Glasfasern verstärkt sind oder mineralische Füllstoffe enthalten. Allerdings haben sie typischerweise hohe Wasseraufnahmen von bis zu 10 % bei Lagerung in Wasser. Für viele Anwendungen mit hohen Anforderungen an die Dimensionsstabilität auch unter nassen oder feuchten Bedingungen können diese aliphatischen Polyamide nicht eingesetzt werden. Darüber hinaus verändern sich mit der Wasseraufnahme auch die mechanischen Eigenschaften; die Steifigkeit und die Festigkeit werden durch die Wasseraufnahme um ein Mehrfaches reduziert.

Teilaromatische Polyamide haben eine reduzierte Wasseraufnahme verglichen mit PA6 und PA66, und die mechanischen Eigenschaften bleiben nach Wasseraufnahme weitgehend erhalten. Sie besitzen darüber hinaus Schmelzpunkte, die zum Teil deutlich über dem des PA66 liegen und wären deshalb im Prinzip für Anwendungen mit hoher Dauertemperaturbelastung geeignet, beispielsweise im Motorraum eines Automobils. Da das PA6T so hoch schmilzt, dass es nicht mehr verarbeitbar ist, werden in der Praxis Copolyamide eingesetzt, beispielsweise PA6T/6I, PA6T/66 oder PA6T/6, bei denen der Schmelzpunkt so weit abgesenkt ist, dass die Polymere verarbeitbar sind. Derartige Copolyamide sind bei geeigneter Zusammensetzung hochkristallin, besitzen Schmelzpunkte im Bereich um etwa 300 °C und eine hohe Steifigkeit; allerdings sind sie generell sehr spröde und besitzen eine sehr geringe Reißdehnung.

Bei Polyamidformmassen ist es generell üblich, die Zähigkeit und die Reißdehnung durch Zumischen eines Schlagzähmodifiers zu verbessern. In den meisten Fällen wird ein polyolefinischer Kautschuk als Schlagzähmodifier verwendet, der mit einem ungesättigten Dicarbonsäureanhydrid wie beispielsweise Maleinsäureanhydrid gepfropft wurde, um eine Phasenanbindung des dispers verteilten Kautschuks an die Polyamidmatrix zu bewirken. Insbesondere wird hierfür ein Ethylen-Propylen-Kautschuk verwendet, der ca. 0,5 Gew.-% an aufgepfropftem Maleinsäureanhydrid enthält.

Auch bei Formmassen auf Basis teilaromatischer Polyamide wurden in der Vergangenheit Anstrengungen unternommen, durch Verwendung eines Schlagzähmodifiers die Zähigkeit und die Reißdehnung zu verbessern.

Die EP 1 988 113 A1 beschreibt eine Polyamidformmasse auf Basis eines Copolyamids 10T/6T, das aus den Monomeren 1,10-Decandiamin, 1,6-Hexamethylendiamin und Terephthalsäure gebildet ist. Die Copolyamide weisen relativ hohe Schmelzpunkte im Bereich um 300 °C auf; das Verarbeitungsfenster ist daher verhälnismäßig klein. Es wird eine Reihe von Schlagzähmodifiern angegeben, die zugesetzt werden können, wobei Ethylen-Propylen-Kautschuk priorisiert wird; es wird aber nicht auf Unterschiede eingegangen und der Erhalt der mechanischen Eigenschaften nach Wärmealterung wird nicht thematisiert. Eigene Versuche haben ergeben, dass bei derartigen schlagzähmodifizierten Formmassen die Reißdehnung gering ist.

Die EP 2 325 260 A1 beschreibt eine Polyamidformmasse auf Basis eines Copolyamids, das aus 1,10-Decandiamin, 1,6-Hexamethylendiamin, Terephthalsäure und mindestens einem weiteren polyamidbildenden Monomeren zusammengesetzt ist. Auch hier wird eine Reihe von Schlagzähmodifiern angegeben, die zugesetzt werden können, wobei Ethylen-Propylen-Kautschuk priorisiert wird. Auch hier haben eigene Versuche ergeben, dass bei derartigen schlagzähmodifizierten Formmassen die Reißdehnung gering ist.

Aus der JP04-202560A ist bekannt, dass Formmassen aus einem Hexamethylendiamin-Isophthalsäure-Terephthalsäure-Copolymer und maleinsäureanhydridfunktionalisiertem Ethylen-1-Buten-Kautschuk nach Temperatureinwirkung sich in ihrer Zähigkeit und Reißdehnung nicht von Formmassen unterscheiden, die andere Kautschuke enthalten.

In der WO 2005/018891 sowie in der JP2010-202724A werden Formmassen beschrieben, die ein aromatisches Polyamid, einen funktionalisierten Schlagzähmodifier sowie einen Kupferstabilisator enthalten. Antioxidantien können ebenfalls zugesetzt sein. Die Formmassen werden für Mehrschichtrohre eingesetzt.

Die aus diesem Stand der Technik bekannten Formmassen weisen allerdings eine Reihe von Nachteilen auf, insbesondere eine nicht ausreichende Wärmealterungsbeständigkeit. Sie sind darüber hinaus schlecht verarbeitbar. Ihre mechanischen Eigenschaften, insbesondere die Schlagzähigkeit und die Reißdehnung, sind so schlecht, dass ihr Einsatz in Formteilen wie etwa Rohren im Motorraum eines Automobils oder unter ähnlichen Bedingungen nicht sinnvoll ist.

Leicht verarbeitbare Formmassen sind aus der WO2012/106309 bekannt; sie enthalten ein teilaromatisches Polyamid mit überwiegend aliphatischem Anteil sowie ein aliphatisches Polyamid und einen funktionalisierten Kautschuk. Ihre Wärmeformbeständigkeit ist jedoch vergleichbar mit vollaliphatischen Polyamiden und reicht für anspruchsvolle Anwendungen bei weitem nicht aus. Die US2013/0115401A1 ist ähnlich.

Die Aufgabe der vorliegenden Erfindung war, diese Nachteile zu vermeiden und insbesondere, gut verarbeitbare, hochschmelzende schlagzähe Formmassen mit hoher Reißdehnung auf Basis eines teilaromatischen Polyamids zur Verfügung zu stellen, die die vorteilhaften mechanischen Eigenschaften auch nach längerem Einsatz bei hohen Temperaturen weitgehend beibehalten.

Diese Aufgabe wurde durch eine Formmasse gelöst, die zu mindestens 40 Gew.-%, vorzugsweise zu mindestens 50 Gew.-%, besonders bevorzugt zu mindestens 60 Gew.%, insbesondere bevorzugt zu mindestens 70 Gew.-% und ganz besonders bevorzugt zu mindestens 80 Gew.-% folgende Komponenten enthält:
a) 60 bis 99 Gew.-Teile, vorzugsweise 65 bis 98 Gew.-Teile, besonders bevorzugt 68 bis 97 Gew.-Teile und insbesondere bevorzugt 70 bis 96 Gew.-Teile eines teilaromatischen Copolyamids, das aus wiederkehrenden Einheiten besteht, die sich herleiten von
   I. 30 bis 90 Mol-%, vorzugsweise 40 bis 85 Mol-%, besonders bevorzugt 45 bis 80 Mol-%, insbesondere bevorzugt 50 bis 75 Mol-% und ganz besonders bevorzugt mehr als 50 bis 70 Mol-% einer Kombination von Hexamethylendiamin und Terephthalsäure sowie
   II. 70 bis 10 Mol-%, vorzugsweise 60 bis 15 Mol-%, besonders bevorzugt 55 bis 20 Mol-%, insbesondere bevorzugt 50 bis 25 Mol-% und ganz besonders bevorzugt weniger als 50 bis 30 Mol-% eines Lactams und/oder einer ω-Aminocarbonsäure mit 11 oder 12 C-Atomen,
   wobei sich die Mol-%-Angaben auf die Summe von I und II beziehen und wobei maximal 20 %, vorzugsweise maximal 15 %, besonders bevorzugt maximal 12 %, insbesondere bevorzugt maximal 8 % und ganz besonders bevorzugt maximal 5 % beziehungsweise maximal 4 % des Hexamethylendiamins durch die äquivalente Menge eines anderen Diamins ersetzt sein kann und/oder wobei maximal 20 %, vorzugsweise maximal 15 %, besonders bevorzugt maximal 12 %, insbesondere bevorzugt maximal 8 % und ganz besonders bevorzugt maximal 5 % beziehungsweise maximal 4 % der Terephthalsäure durch die äquivalente Menge einer anderen aromatischen Dicarbonsäure und/oder 1,4-Cyclohexandicarbonsäure ersetzt sein kann und/oder wobei maximal 20 %, vorzugsweise maximal 15 %, besonders bevorzugt maximal 12 %, insbesondere bevorzugt maximal 8 % und ganz besonders bevorzugt maximal 5 % beziehungsweise maximal 4 % der wiederkehrenden Einheiten aus einem Lactam und/oder einer ω-Aminocarbonsäure mit 11 oder 12 C-Atomen durch die äquivalente Menge von Einheiten ersetzt sein kann, die sich von einer Kombination von Hexamethylendiamin und einer linearen aliphatischen Dicarbonsäure mit 8 bis 19 C-Atomen und/oder Caprolactam herleiten,
b) 40 bis 1 Gew.-Teile, vorzugsweise 35 bis 2 Gew.-Teile, besonders bevorzugt 32 bis 3 Gew.-Teile und insbesondere bevorzugt 30 bis 4 Gew.-Teile eines olefinischen Copolymers, das folgende Monomereinheiten enthält:
   - 35 bis 94,9 Gew.-%, vorzugsweise 40 bis 90 Gew.-% und besonders bevorzugt 45 bis 85 Gew.-% Monomereinheiten auf Basis von Ethen,
   - 5 bis 65 Gew.-%, vorzugsweise 10 bis 60 Gew.-% und besonders bevorzugt 15 bis 55 Gew.-% Monomereinheiten auf Basis eines 1-Alkens mit 4 bis 8 C-Atomen,
   - 0 bis 10 Gew.-% Monomereinheiten auf Basis eines anderen Olefins sowie
   - 0,1 bis 2,5 Gew.-% Monomereinheiten auf Basis eines aliphatisch ungesättigten Dicarbonsäureanhydrids,
      wobei die einzelnen Anteile so gewählt werden, dass die Summe dieser Gew.-%-Angaben 100 ergibt
   und wobei die Summe der Gew.-Teile von a) und b) 100 ergibt.

Anspruchsgemäß kann optional ein Teil des Hexamethylendiamins durch ein anderes Diamin ersetzt sein. Hier ist prinzipiell jedes Diamin geeignet; als Beispiel seien folgende Diamine genannt: 1,10-Decandiamin, 1,12-Dodecandiamin, m-Xylylendiamin, p-Xylylendiamin, Bis-(4-aminocyclohexyl)-methan, 2-Methyl-1,5-pentandiamin sowie 1,4-Bis-aminomethyl-cyclohexan. Selbstverständlich können auch Mischungen derartiger Diamine eingesetzt werden. Vorzugsweise wird jedoch neben Hexamethylendiamin kein weiteres Diamin eingesetzt.

Anspruchsgemäß kann optional auch ein Teil der Terephthalsäure durch eine andere aromatische Dicarbonsäure oder durch 1,4-Cyclohexandicarbonsäure ersetzt werden. Hier ist prinzipiell jede aromatische Dicarbonsäure geeignet; als Beispiel seien folgende Dicarbonsäuren genannt: Isophthalsäure, 4,4'-Diphenyldicarbonsäure, 4,4'-Diphenyletherdicarbonsäure, 2,6-Naphthalindicarbonsäure, 1,4-Naphthalindicarbonsäure sowie 1,5-Naphthalindicarbonsäure. Selbstverständlich können auch Mischungen derartiger Dicarbonsäuren eingesetzt werden. Vorzugsweise wird jedoch neben Terephthalsäure keine weitere aromatische Dicarbonsäure und weiterhin bevorzugt keine 1,4-Cyclohexandicarbonsäure eingesetzt.

Genauso kann anspruchsgemäß optional ein Teil der wiederkehrenden Einheiten aus einem Lactam bzw. einer ω-Aminocarbonsäure mit 11 oder 12 C-Atomen durch die äquivalente Menge von Einheiten ersetzt sein, die sich von einer Kombination von Hexamethylendiamin und einer linearen aliphatischen Dicarbonsäure mit 8 bis 19 C-Atomen und/oder von Caprolactam herleiten. Lactame bzw. ω-Aminocarbonsäuren mit 11 oder 12 C-Atomen sind Undecanolactam, ω-Aminoundecansäure, Laurinlactam sowie ω-Aminododecansäure. Als lineare aliphatische Dicarbonsäure mit 8 bis 19 C-Atomen kommen folgende in Frage: Octandisäure (Korksäure; C₈), Nonandisäure (Azelainsäure; C₉), Decandisäure (Sebacinsäure; C₁₀), Undecandisäure (C₁₁), Dodecandisäure (C₁₂), Tridecandisäure (C₁₃), Tetradecandisäure (C₁₄), Pentadecandisäure (C₁₅), Hexadecandisäure (C₁₆), Heptadecandisäure (C₁₇), Octadecandisäure (C₁₈) und Nonadecandisäure (C₁₉).

Die Zusammensetzung des teilaromatischen Copolyamids wird vorteilhafterweise so gewählt, dass sein Kristallitschmelzpunkt Tₘ gemäß ISO 11357, gemessen beim 2. Aufheizen, im Bereich von 240 bis 300 °C, vorzugsweise im Bereich von 250 bis 295 °C und besonders bevorzugt im Bereich von 260 bis 290 °C liegt. Wenn mehrere Schmelzpeaks auftreten, wird Tₘ aus dem Hauptschmelzpeak ermittelt.

Das Copolyamid wird in der Regel durch Schmelzepolykondensation hergestellt. Entsprechende Verfahren sind Stand der Technik. Alternativ kann auch jedes andere bekannte Polyamid-Syntheseverfahren verwendet werden.

Eine notwendigerweise äquimolare Kombination von Hexamethylendiamin und Terephthalsäure liegt dann vor, wenn gewährleistet ist, dass diese Monomeren im Molverhältnis 1 : 1 reagieren können. Hierbei kann berücksichtigt werden, dass Hexamethylendiamin relativ flüchtig ist und aus diesem Grunde während der Polykondensation Verluste auftreten können, die durch eine erhöhte Einwaage ausgeglichen werden müssen. Es kann darüber hinaus nötig sein, in geringem Umfang von der exakten Stöchiometrie abzuweichen, um ein bestimmtes Endgruppenverhältnis einzustellen.

In einer bevorzugten Ausführungsform beträgt beim teilaromatischen Polyamid das Verhältnis der Aminoendgruppen zur Summe aus Amino- und Carboxylendgruppen 0,3 bis 0,7 und besonders bevorzugt 0,35 bis 0,65. Der Anteil der Aminoendgruppen kann durch Regelung der Polykondensation nach Methoden eingestellt werden, die dem Fachmann bekannt sind. Die Regelung kann beispielsweise durch Variation des Verhältnisses von eingesetztem Diamin zu eingesetzter Dicarbonsäure, durch Zusatz einer Monocarbonsäure oder durch Zusatz eines Monoamins erfolgen. Darüber hinaus kann der Anteil an Aminoendgruppen auch dadurch eingestellt werden, dass man zwei Copolyamide, von denen eines reich an Aminoendgruppen und das andere arm an Aminoendgruppen ist, als Granulat oder in der Schmelze mischt.

Der Aminogruppengehalt kann durch Titration einer Lösung des Copolyamids in m-Kresol mittels Perchlorsäure bestimmt werden. Die Bestimmung des Carboxylgruppengehalts kann durch Titration einer Lösung des Copolyamids in o-Kresol mittels KOH in Ethanol erfolgen. Diese Methoden sind dem Fachmann geläufig.

Beim olefinischen Copolymer kommen als 1-Alken mit 4 bis 8 C-Atomen folgende Verbindungen in Frage: 1-Buten, 1-Penten, 1-Hexen, 1-Hepten und 1-Octen. Selbstverständlich können sich die Monomereinheiten auf Basis eines 1-Alkens mit 4 bis 8 C-Atomen auch von Mischungen dieser Verbindungen herleiten.

Das andere Olefin, dessen Monomereinheiten im olefinischen Copolymer zu 0 bis 10 Gew.-% enthalten sein können, ist von der Art her nicht limitiert. Es kann beispielsweise ein unkonjugiertes Dien sein, ein Monoen wie Propen, 4-Methylpenten-1 oder Styrol oder eine Mischung hiervon.

In einer ersten Ausführungsform ist das andere Olefin, dessen Monomereinheiten im olefinischen Copolymer zu 0 bis 10 Gew.-% enthalten sein können, kein unkonjugiertes Dien.

In einer zweiten Ausführungsform ist dieses andere Olefin kein Styrol und/oder kein Propen.

In einer dritten Ausführungsform enthält das olefinische Copolymer nur Monomereinheiten, die sich von Ethen, einem 1-Alken mit 4 bis 8 C-Atomen und einem aliphatisch ungesättigten Dicarbonsäureanhydrid herleiten.

In einer vierten Ausführungsform ist das 1-Alken mit 4 bis 8 C-Atomen 1-Buten.

In einer fünften Ausführungsform ist das 1-Alken mit 4 bis 8 C-Atomen 1-Hexen.

In einer sechsten Ausführungsform ist das 1-Alken mit 4 bis 8 C-Atomen 1-Octen.

Diese Ausführungsformen können ohne Einschränkung miteinander kombiniert werden.

Das aliphatisch ungesättigte Dicarbonsäureanhydrid kann beispielsweise Maleinsäureanhydrid sein, jedoch sind auch andere entsprechende Verbindungen wie etwa Aconitsäureanhydrid, Citraconsäureanhydrid oder Itaconsäureanhydrid geeignet.

Das anspruchsgemäße olefinische Copolymer kann auf bekannte Weise hergestellt werden, wobei das aliphatisch ungesättigte Dicarbonsäureanhydrid oder eine Vorstufe hiervon, beispielsweise die entsprechende Säure oder ein Halbester, thermisch oder bevorzugt radikalisch mit einem vorgebildeten Copolymer umgesetzt wird. Das aliphatisch ungesättigte Dicarbonsäureanhydrid kann hierbei auch in Kombination mit anderen Monomeren umgesetzt werden, beispielweise mit Fumarsäuredibutylester oder Styrol. Anspruchsgemäße olefinische Copolymere sind in verschiedenen Typen kommerziell erhältlich.

Das olefinische Copolymer ist in der Regel kautschukartig, obgleich es auch einen relativ hohen kristallinen Anteil haben kann. Dieser ist insbesondere bei höherem Gehalt an Monomereinheiten, die sich von Ethen herleiten, und bei nicht vollständig statistischer Verteilung der einzelnen Monomereinheiten feststellbar.

Die erfindungsgemäße Formmasse enthält neben den Komponenten a) und b) gegebenenfalls weitere Zusätze, die die Balance zu 100 Gew.-% ergeben, und vorzugsweise mindestens 0,01 Gew.-% hiervon. Diese weiteren Zusätze sind beispielsweise:
a) Stabilisatoren,
b) andere Polymere,
c) faserförmige Verstärkungsstoffe,
d) Füllstoffe,
e) Weichmacher,
f) Pigmente und/oder Farbstoffe,
g) Flammschutzmittel und
h) Verarbeitungshilfsmittel.

In einer bevorzugten Ausführungsform enthält die Formmasse eine wirksame Menge eines kupferhaltigen Stabilisators. Dies ist insbesondere eine Kupferverbindung, die in der Polyamidmatrix löslich ist. Vorzugsweise wird die Kupferverbindung mit einem Alkalimetall kombiniert.

In bestimmten Ausführungsformen ist der Stabilisator ein Kupfer(I)-Salz, z. B. Kupferacetat, Kupferstearat, eine organische Kupferkomplex-Verbindung wie beispielsweise Kupferacetylacetonat, ein Kupferhalogenid oder dergleichen in Kombination mit einem Alkalimetallhalogenid.

In bestimmten Ausführungsformen umfasst der kupferhaltige Stabilisator ein Kupferhalogenid, ausgewählt aus Kupferiodid und Kupferbromid und ein Alkalimetallhalogenid ausgewählt aus den Iodiden und Bromiden von Lithium, Natrium und Kalium.

Vorzugsweise wird der kupferhaltige Stabilisator so dosiert, dass die Formmasse 20 bis 2000 ppm Kupfer, besonders bevorzugt 30 bis 1500 ppm Kupfer und insbesondere bevorzugt 40 bis 1000 ppm Kupfer enthält.

Weiterhin ist bevorzugt, dass der kupferhaltige Stabilisator so zusammengesetzt ist, dass das Gewichtsverhältnis von Alkalimetallhalogenid zu Kupferverbindung im Bereich von 2,5 bis 12 und besonders bevorzugt im Bereich von 6 bis 10 liegt. Die Kombination von Alkalimetallhalogenid und Kupferverbindung ist im Allgemeinen in der Formmasse zu etwa 0,01 Gew.-% bis etwa 2,5 Gew.-% enthalten.

Der kupferhaltige Stabilisator bietet Schutz gegen langfristige Wärmealterung, beispielsweise bei Anwendungen unter der Motorhaube eines Automobils.

In einer weiteren bevorzugten Ausführungsform enthält die Formmasse eine wirksame Menge eines Oxidationsstabilisators und besonders bevorzugt eine wirksame Menge eines Oxidationsstabilisators in Kombination mit der wirksamen Menge eines kupferhaltigen Stabilisators. Geeignete Oxidationsstabilisatoren sind beispielweise aromatische Amine, sterisch gehinderte Phenole, Phosphite, Phosphonite, Thiosynergisten, Hydroxylamine, Benzofuranonderivate, acryloylmodifizierte Phenole etc. Derartige Oxidationsstabilisatoren sind in einer Vielzahl von Typen kommerziell erhältlich, beispielsweise unter den Handelsnamen Naugard 445, Irganox 1010, Irganox 1098, Irgafos 168, P-EPQ oder Lowinox DSTDP. Im Allgemeinen enthält die Formmasse etwa 0,01 bis etwa 2 Gew.-% und bevorzugt etwa 0,1 bis etwa 1,5 Gew.-% eines Oxidationsstabilisators.

Darüber hinaus kann die Formmasse auch einen UV-Stabilisator bzw. einen Lichtstabilisator vom HALS-Typ enthalten. Geeignete UV-Stabilisatoren sind in erster Linie organische UV-Absorber, beispielsweise Benzophenonderivate, Benzotriazolderivate, Oxalanilide oder Phenyltriazine. Lichtstabilisatoren vom HALS-Typ sind Tetramethylpiperidinderivate; es handelt sich hier um Inhibitoren, die als Radikalfänger wirken. UV-Stabilisatoren und Lichtstabilisatoren können vorteilhaft in Kombination eingesetzt werden. Beide sind in einer Vielzahl von Typen kommerziell erhältlich; hinsichtlich der Dosierung kann den Herstellerangaben gefolgt werden.

Die Formmasse kann zusätzlich einen Hydrolysestabilisator enthalten wie etwa ein monomeres, oligomeres oder polymeres Carbodiimid oder ein Bisoxazolin.

Andere Polymere, die als Zusatz in der Formmasse enthalten sein können, sind beispielsweise aliphatische Polyamide, Polyetheramide, Polytetrafluorethylen (PTFE) oder Polyphenylenether.

Geeignete aliphatische Polyamide sind beispielsweise PA46, PA66, PA68, PA610, PA612, PA613, PA410, PA412, PA810, PA1010, PA1012, PA1013, PA1014, PA1018, PA1212, PA6, PA11 und PA12 sowie Copolyamide, die sich von diesen Typen herleiten. Vorzugsweise enthält der Polyamidanteil der Formmasse, der sich aus dem teilaromatischen Copolyamid, gegebenenfalls aliphatischem Polyamid sowie gegebenenfalls Polyetheramid zusammensetzt, weniger als 10 Gew.-%, besonders bevorzugt weniger als 8 Gew.-%, insbesondere bevorzugt weniger als 5 Gew.-% und ganz besonders bevorzugt weniger als 3 Gew.-% aliphatisches Polyamid oder vorzugsweise weniger als 10 Gew.-%, besonders bevorzugt weniger als 8 Gew.-%, insbesondere bevorzugt weniger als 5 Gew.-% und ganz besonders bevorzugt weniger als 3 Gew.-% an der Summe aus aliphatischem Polyamid und Polyetheramid.

Geeignete Polyphenylenether werden nach üblichen Verfahren aus in ortho-Position durch Alkylgruppen disubstituierten Phenolen durch oxidative Kupplung hergestellt. Ein besonders bevorzugter Polyphenylenether ist Poly(2,6-dimethyl-1,4-phenylen)ether, optional in Kombination mit 2,3,6-Trimethylphenoleinheiten. Gemäß dem Stand der Technik enthält der Polyphenylenether funktionelle Gruppen zur Anbindung an die Polyamidmatrix; diese funktionellen Gruppen werden beispielsweise durch Behandlung mit Maleinsäureanhydrid eingebracht.

Als anderes Polymer ist vorzugsweise maximal 4 Gew.-% und besonders bevorzugt kein Polyhydroxypolymer ausgewählt aus Ethylen/Vinylalkohol-Copolymer und Polyvinylalkohol in der Formmasse enthalten und insbesondere bevorzugt gleichzeitig auch kein aliphatisches Polyamid.

Die Formmasse enthält an anderen Polymeren bevorzugt maximal 40 Gew.-%, besonders bevorzugt maximal 30 Gew.-% und insbesondere bevorzugt maximal 25 Gew.-%.

Als faserförmige Verstärkungsstoffe werden beispielsweise Glasfasern eingesetzt. Hierbei können Kurzfasern (z. B. Schnittglasfasern mit einer Länge von 0,2 - 50 mm) oder Endlosfasern (Rovings) verwendet werden. Die Querschnittsfläche der Glasfasern kann kreisförmig sein, sie kann aber auch oval, elliptisch, elliptisch mit Einschnürungen (cocoon-Fasern), polygonal, rechteckig oder nahezu rechteckig sein. Langfaserverstärkte Formmassen können durch die bekannten Methoden zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird.

Andere geeignete faserförmige Verstärkungsstoffe sind beispielsweise Carbonfasern, Graphitfasern, Silicumcarbidfasern, Borfasern, Aramidfasern, Fasern aus rostfreiem Stahl oder Kaliumtitanatwhisker.

Geeignete Füllstoffe sind beispielsweise Talkum, Glimmer, Silikat, Quarz, Graphit, Molybdändisulfid, Titandioxid, Wollastonit, Kaolin, amorphe Kieselsäuren, Magnesiumcarbonat, Kreide, Kalk, Feldspat, Bariumsulfat, Leitfähigkeitsruß, Graphitfibrillen, Voll- oder Hohl-Glaskugeln oder gemahlenes Glas.

Der Anteil der faserförmigen Verstärkungsstoffe sowie der Füllstoffe an der Formmasse beträgt insgesamt maximal 60 Gew.-%, vorzugsweise maximal 50 Gew.-% sowie vorzugsweise mindestens 0,1 Gew.-%.

Weichmacher und ihr Einsatz bei Polyamiden sind bekannt. Eine allgemeine Übersicht über Weichmacher, die für Polyamide geeignet sind, können Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen unter anderem p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Geeignete Pigmente und/oder Farbstoffe sind beispielsweise Ruß, Eisenoxid, Zinksulfid, Ultramarin, Nigrosin, Perlglanzpigmente und Metallflitter.

Geeignete Flammschutzmittel sind beispielsweise Antimontrioxid, Hexabromcyclododecan, Tetrabrombisphenol, Borate, roter Phosphor, Magnesiumhydroxid, Aluminiumhydroxid, Melamincyanurat und dessen Kondensationsprodukte wie Melam, Melem, Melon; Melaminverbindungen wie Melaminpyro- und -polyphosphat, Ammoniumpolyphosphat sowie phosphororganische Verbindungen bzw. deren Salze wie beispielsweise Resorcinoldiphenylphosphat, Phosphonsäureester oder Metallphosphinate.

Geeignete Verarbeitungshilfsmittel sind beispielsweise Paraffine, Fettalkohole, Fettsäureamide, Stearate wie Calciumstearat, Paraffinwachse, Montanate oder Polysiloxane.

Die Formmasse wird aus den einzelnen Bestandteilen auf dem Fachmann bekannte Weise durch Mischen in der Schmelze hergestellt.

Die erfindungsgemäße Formmasse kann beispielsweise durch Spritzgießen, Extrusion oder Blasformen zu Formteilen verarbeitet werden. Beispiele derartiger Formteile sind Gehäuse und Funktionsteile für Pumpen, Getriebe, Ventile und Wasserzähler, Drosselklappen, Scheinwerfergehäuse, Reflektoren, Kurvenlichtverstellung, Zahnräder, Steckverbindungen, Konnektoren, Profile, Folien oder Schichten von Mehrschichtfolien, elektronische Bauteile, Gehäuse für elektronische Bauteile, Werkzeuge, Verbundwerkstoffe, Kunststoff-Kautschuk-Verbunde, Stutzen sowie Fittings zum Verbinden von Schläuchen oder Rohren.

Insbesondere können aus der erfindungsgemäßen Formmasse ein- oder mehrschichtige Hohlkörper hergestellt werden, in erster Linie Rohre oder Behälter. Darunter fallen beispielsweise Ladeluftrohre für ein Automobil, fluidführende Mono- oder Mehrschichtleitungen, die glatt oder gewellt sein können, etwa Kraftstoffleitungen, Hydraulikleitungen, Bremsleitungen, Kupplungsleitungen oder Kühlflüssigkeitsleitungen, Bremsflüssigkeitsbehälter oder Kraftstoffbehälter. Weitere Anwendungen sind beispielsweise Liner für starre oder flexible Rohre in der Öl- oder Gasförderindustrie, Antiweartapes bei flexiblen Rohren für die Offshore-Förderung oder Leitungen von Umbilicals, in denen heiße Flüssigkeiten gefördert werden.

Bei Mehrschichtfolien, Mehrschichtrohren und Mehrschichtbehältern ist mindestens eine Schicht aus der erfindungsgemäßen Formmasse mit mindestens einer weiteren Schicht verbunden, die aus einer anderen Formmasse besteht. Bei nicht ausreichender Schichtenhaftung kann eine zwischenliegende Haftvermittlerschicht eingesetzt werden.

Die Formteile aus der erfindungsgemäßen Formmasse können überall dort eingesetzt werden, wo regelmäßig hohe Temperaturen herrschen, ohne dass ihre Schlagzähigkeit sowie ihre Reißdehnung sich in größerem Ausmaß verschlechtern.

Die Erfindung soll nachfolgend beispielhaft erläutert werden.

In den Beispielen wurden folgende Materialien eingesetzt:

| | |
|---|---|
| **PA6T/12:** | siehe Herstellungsbeispiel 1 |
| **AMODEL A-1006:** | ein PA6T/6I/66 der Firma Solvay Specialty Polymers mit etwa 65 Mol-% 6T, etwa 25 Mol-% 6I und etwa 10 Mol-% 66 |
| **PA10T/TMDT:** | siehe Herstellungsbeispiel 2 |
| **Farbbatch:** | Mischung aus 80 Gew.-% PA12 und 20 Gew.-% Ruß |
| **TAFMER MH7010:** | ein säuremodifizierter Ethylen-Butylen-Kautschuk der Firma Mitsui Chemicals |
| **EXXELOR VA1803:** | ein säuremodifizierter Ethylen-Propylen-Kautschuk der Firma ExxonMobil Chemical |
| **Calciumstearat:** | Verarbeitungshilfsmittel |
| **Polyad PB201 Jodide:** | kupferhaltiger Stabilisator auf Basis von Kupferiodid und Alkalihalogenid |
| **Naugard 445:** | Oxidationsstabilisator (aromatisches Amin) |

### Herstellungsbeispiel 1 (PA6T/12 60 : 40; erfindungsgemäß):

In einem Polykondensationskessel wurden 19,118 kg Hexamethylendiamin, 20,898 kg Terephthalsäure, 34,953 kg ω-Aminolaurinsäure, 32,130 kg destilliertes Wasser und 7,46 g einer 50-gewichtsprozentigen wässrigen Lösung von hypophosphoriger Säure vorgelegt. Die Einsatzstoffe wurden bei 180 °C aufgeschmolzen und bei 220 °C/22 bar 3 Stunden gerührt. Unter kontinuierlicher Entspannung auf 2 bar wurde auf 300 °C aufgeheizt und bei dieser Temperatur weiter entspannt. Bei Erreichen von 0,6 bar wurde der Kessel entleert und das Produkt granuliert. Das Granulat wurde in einem Taumeltrockner nachkondensiert und so auf das gewünschte Molekulargewicht gebracht.

### Kristallitschmelzpunkt Tₘ: 269,5 °C (Hauptpeak)

### Herstellungsbeispiel 2 (PA10T/TMDT 85 : 15; nicht erfindungsgemäß):

Die Herstellung erfolgte durch die in der Fig. 2 der US 2361717 dargestellte Apparatur, bei der jedoch die Positionen 23, 24 und 25 durch einen hochdruckfesten Autoklaven ersetzt wurden, der durch eine Intertgasüberlagerung einen konstanten Förderdruck durch die Reaktoren gewährleistete. Beide Reaktoren wurden mit einem Ölvorlauf von 360 °C betrieben.

Im Autoklaven wurden 24,70 kg Terephthalsäure, 21,775 kg Decamethylendiamin, 3,53 kg eines Gemisches aus 2,2,4- und 2,4,4-Trimethylhexamethylendiamin (TMD), 14,0 kg vollentsalztes Wasser (VE-Wasser) und 10,0 g einer 50-gewichtsprozentigen wässrigen Lösung von hypophosphoriger Säure vorgelegt, dreimal mit Stickstoff inertisiert, der Autoklav abgesperrt und mit einer Ölvorlauftemperatur von 230 °C aufgeheizt. Hierbei bildete sich eine klare homogene Salzlösung. Der Autoklav wurde mit Stickstoff auf konstant 44 bar Gesamtdruck eingestellt; dieser Druck förderte das Material durch die Anlage. Das erhaltene Produkt wurde in einem Taumeltrockner nachkondensiert und so auf das gewünschte Molekulargewicht gebracht.

### Kristallitschmelzpunkt Tₘ: 285 °C

### Herstellung der Formmassen:

Die Formmassen wurden aus den einzelnen Bestandteilen durch Schmelzemischung in einem knetenden Aggregat hergestellt, als Strang ausgetragen, granuliert und getrocknet.

Anschließend wurden Prüfkörper durch Spritzgießen hergestellt. Ein Teil dieser Prüfkörper wurde in spritzfrischem Zustand einem Zugversuch gemäß ISO 527 unterworfen, ein Teil nach vierstündiger Wärmealterung bei 180 °C in Luft und ein weiterer Teil nach 295 Stunden Wärmealterung bei 180 °C in Luft. Die Zusammensetzung und die Prüfergebnisse gehen aus der Tabelle 1 hervor.

Nach 4 Stunden bei 180 °C ist noch keine starke Wärmealterung zu erwarten. Die Veränderung der Messwerte ist hier in erster Linie auf die Nachkristallisation der Proben zurückzuführen.

Bei den Vergleichsbeispielen 2 bis 5 können von Anfang an weder Streckspannung noch Streckdehnung gemessen werden. Dies liegt an der nur geringen Bruchdehnung.

Die Bruchdehnung in spritzfrischem Zustand sowie nach der Nachkristallisation ist beim Beispiel 1 sowie insbesondere beim Vergleichsbeispiel 1 am größten. Nach thermischer Alterung drehen sich hier die Verhältnisse um; im Beispiel 1 bleiben 40,5 % der ursprünglichen Bruchdehnung erhalten, während beim Vergleichsbeispiel 1 die Bruchdehnung auf nur 13,3 % des ursprünglichen Werts zurückgeht.

Die Ergebnisse zeigen, dass ein kombinatorischer Effekt vorliegt. Es kommt sowohl auf die Wahl des richtigen teilaromatischen Polyamids als auch auf die Wahl des passenden olefinischen Copolymers an. Diese doppelte Auswahl war vom Stand der Technik nicht nahegelegt.

**Tabelle 1: Beispiel 1 und Vergleichsbeispiele 1 bis 5; Zusammensetzungen und Prüfergebnisse**

| | Einheit | Beispiel 1 | Vergleichsbeispiel 1 | Vergleichsbeispiel 2 | Vergleichsbeispiel 3 | Vergleichsbeispiel 4 | Vergleichsbeispiel 5 |
|---|---|---|---|---|---|---|---|
| PA6T/12 | Gew.-Teile | 65,38 | 65,38 | | | | |
| AMODEL A-1006 | Gew.-Teile | | | 65,38 | 65,38 | | |
| PA10T/TMDT | Gew.-Teile | | | | | 65,38 | 65,38 |
| Farbbatch | Gew.-Teile | 2,5 | 2,5 | 2,5 | 2,5 | 2,5 | 2,5 |
| TAFMER MH7010 | Gew.-Teile | 30 | | 30 | | 30 | |
| EXXELOR VA1803 | Gew.-Teile | | 30 | | 30 | | 30 |
| Calciumstearat | Gew.-Teile | 0,32 | 0,32 | 0,32 | 0,32 | 0,32 | 0,32 |
| Polyad PB201 Iodide | Gew.-Teile | 1,2 | 1,2 | 1,2 | 1,2 | 1,2 | 1,2 |
| Naugard 445 | Gew.-Teile | 0,6 | 0,6 | 0,6 | 0,6 | 0,6 | 0,6 |
| E-Modul | MPa | 1239 | 1225 | 1493 | 1579 | 1352 | 1332 |
| Streckspannung | MPa | 33,8 | 34,5 | - | - | - | - |
| Streckdehnung | % | 4,75 | 4,72 | - | - | - | - |
| Bruchspannung | MPa | 33,1 | 31,1 | 36,9 | 33,9 | 37,9 | 36,1 |
| Bruchdehnung | % | 59,18 | 89,42 | 5,16 | 3,29 | 5,82 | 5,27 |
| E-Modul (4 h/180 °C) | MPa | 1264 | 1273 | 1511 | 1562 | 1345 | 1408 |
| Streckspannung (4 h/180°C) | MPa | 35,1 | 35,8 | - | - | - | - |
| Streckdehnung (4 h/180 °C) | % | 5,74 | 5,04 | - | - | - | - |
| Bruchspannung (4 h/180 °C) | MPa | 35,5 | 36,5 | 36,9 | 34,4 | 38,6 | 31,6 |
| Bruchdehnung(4 h/180 °C) | % | 46,62 | 88,68 | 4,07 | 3,02 | 4,53 | 3,04 |
| E-Modul (295 h/180 °C) | MPa | 1277 | 1315 | 1526 | 1558 | 1390 | 1401 |
| Streckspannung (295 h/180 °C) | MPa | 34,3 | 35,3 | - | - | - | - |
| Streckdehnung (295 h/180 °C) | % | 4,45 | 4,22 | - | - | - | - |
| Bruchspannung (295 h/180 °C) | MPa | 33,4 | 33,7 | 33,5 | 30,6 | 26,6 | 22,6 |
| Bruchdehnung (295 h/180 °C) | % | 23,95 | 11,89 | 3,16 | 2,35 | 2,29 | 1,96 |

## Patentansprüche

1. Formmasse, die zu mindestens 40 Gew.-% folgende Komponenten enthält:
a) 60 bis 99 Gew.-Teile eines teilaromatischen Copolyamids, das aus wiederkehrenden Einheiten besteht, die sich herleiten von
I. 30 bis 90 Mol-% einer Kombination von Hexamethylendiamin und Terephthalsäure sowie
II. 70 bis 10 Mol-% eines Lactams und/oder einer ω-Aminocarbonsäure mit 11 oder 12 C-Atomen,
wobei sich die Mol-%-Angaben auf die Summe von I und II beziehen und wobei maximal 20 % des Hexamethylendiamins durch die äquivalente Menge eines anderen Diamins ersetzt sein kann und/oder wobei maximal 20 % der Terephthalsäure durch die äquivalente Menge einer anderen aromatischen Dicarbonsäure und/oder 1,4-Cyclohexandicarbonsäure ersetzt sein kann und/oder wobei maximal 20 % der wiederkehrenden Einheiten aus einem Lactam und/oder einer ω-Aminocarbonsäure mit 11 oder 12 C-Atomen durch die äquivalente Menge von Einheiten ersetzt sein kann, die sich von einer Kombination von Hexamethylendiamin und einer linearen aliphatischen Dicarbonsäure mit 8 bis 19 C-Atomen und/oder Caprolactam herleiten,
b) 40 bis 1 Gew.-Teile eines olefinischen Copolymers, das folgende Monomereinheiten enthält:
- 35 bis 94,9 Gew.-% Monomereinheiten auf Basis von Ethen,
- 5 bis 65 Gew.-% Monomereinheiten auf Basis eines 1-Alkens mit 4 bis 8 C-Atomen,
- 0 bis 10 Gew.-% Monomereinheiten auf Basis eines anderen Olefins sowie
- 0,1 bis 2,5 Gew.-% Monomereinheiten auf Basis eines aliphatisch ungesättigten Dicarbonsäureanhydrids,
wobei die einzelnen Anteile so gewählt werden, dass die Summe dieser Gew.-%-Angaben 100 ergibt
und wobei die Summe der Gew.-Teile von a) und b) 100 ergibt.

2. Formmasse gemäß Anspruch 1,
**dadurch gekennzeichnet,**
**dass** der Kristallitschmelzpunkt Tₘ des Copolyamids gemäß ISO 11357, gemessen beim 2. Aufheizen, im Bereich von 240 °C bis 300 °C liegt.

3. Formmasse gemäß einem der vorhergehenden Ansprüche,
**dadurch gekennzeichnet,**
**dass** im teilaromatischen Copolyamid das Verhältnis der Aminoendgruppen zur Summe aus Amino- und Carboxylendgruppen 0,3 bis 0,7 beträgt.

4. Formmasse gemäß einem der vorhergehenden Ansprüche,
**dadurch gekennzeichnet,**
**dass** beim olefinischen Copolymer gemäß b) das andere Olefin kein unkonjugiertes Dien ist.

5. Formmasse gemäß einem der vorhergehenden Ansprüche,
**dadurch gekennzeichnet,**
**dass** beim olefinischen Copolymer gemäß b) das andere Olefin kein Styrol und/oder kein Propen ist.

6. Formmasse gemäß einem der Ansprüche 1 bis 3,
**dadurch gekennzeichnet,**
**dass** das olefinische Copolymer nur Monomereinheiten enthält, die sich von Ethen, einem 1-Alken mit 4 bis 8 C-Atomen und einem aliphatisch ungesättigten Dicarbonsäureanhydrid herleiten.

7. Formmasse gemäß einem der vorhergehenden Ansprüche,
**dadurch gekennzeichnet,**
**dass** das 1-Alken mit 4 bis 8 C-Atomen 1-Buten, 1-Hexen, 1-Octen oder eine Mischung hiervon ist.

8. Formmasse gemäß einem der vorhergehenden Ansprüche,
**dadurch gekennzeichnet,**
**dass** sie 0,01 bis 60 Gew.-% weitere Zusätze enthält.

9. Formmasse gemäß Anspruch 8,
**dadurch gekennzeichnet,**
**dass** einer der weiteren Zusätze ein kupferhaltiger Stabilisator ist.

10. Formmasse gemäß einem der Ansprüche 8 und 9,
**dadurch gekennzeichnet,**
**dass** einer der weiteren Zusätze ein Oxidationsstabilisator ist.

11. Formteil, hergestellt unter Verwendung der Formmasse gemäß einem der vorhergehenden Ansprüche.

12. Formteil gemäß Anspruch 11,
**dadurch gekennzeichnet,**
**dass** es ein einschichtiges Rohr oder ein Mehrschichtrohr ist.

13. Formteil gemäß Anspruch 11,
**dadurch gekennzeichnet,**
**dass** es ein einschichtiger Behälter oder ein Mehrschichtbehälter ist.

## Claims

1. Moulding compound which contains at least 40 wt.% of the following components:
a) 60 to 99 parts by wt. of a partially aromatic copolyamide which consists of repeating units which are derived from
I. 30 to 90 mol% of a combination of hexamethylenediamine and terephthalic acid and
II. 70 to 10 mol% of a lactam and/or of an ω-aminocarboxylic acid with 11 or 12 C atoms,
wherein the mol% values relate to the sum of I and II and wherein at most 20% of the hexamethylenediamine can be replaced by the equivalent quantity of another diamine and/or wherein at most 20% of the terephthalic acid can be replaced by the equivalent quantity of another aromatic dicarboxylic acid and/or 1,4-cyclohexanedicarboxylic acid and/or wherein at most 20% of the repeating units of a lactam and/or of an ω-aminocarboxylic acid with 11 or 12 C atoms can be replaced respectively by the equivalent quantity of units which are derived from a combination of hexamethylenediamine and a linear aliphatic dicarboxylic acid with 8 to 19 C atoms and/or caprolactam,
b)40 to 1 parts by wt. of an olefinic copolymer which contains the following monomer units:
- 35 to 94.9 wt.% of ethene-based monomer units,
- 5 to 65 wt.% of monomer units based on a 1-alkene with 4 to 8 C atoms,
- 0 to 10 wt.% of monomer units based on another olefin and
- 0.1 to 2.5 wt.% of monomer units based on an aliphatically unsaturated dicarboxylic acid anhydride,
wherein the individual contents are selected such that the sum of these wt.% values is 100
and wherein the sum of the parts by wt. of a) and b) is 100.

2. Moulding compound according to Claim 1,
**characterized in that**
the crystallite melting point Tₘ of the copolyamide according to ISO 11357, measured during the 2nd heating, lies in the range from 240°C to 300°C.

3. Moulding compound according to one of the previous claims,
**characterized in that**
in the partially aromatic copolyamide the ratio of the amino end groups to the sum of amino and carboxyl end groups is 0.3 to 0.7.

4. Moulding compound according to one of the previous claims,
**characterized in that**
in the olefinic copolymer according to b) the other olefin is not an unconjugated diene.

5. Moulding compound according to one of the previous claims,
**characterized in that**
in the olefinic copolymer according to b) the other olefin is not styrene and/or not propene.

6. Moulding compound according to one of Claims 1 to 3,
**characterized in that**
the olefinic copolymer contains only monomer units which are derived from ethene, a 1-alkene with 4 to 8 C atoms and an aliphatically unsaturated dicarboxylic acid anhydride.

7. Moulding compound according to one of the previous claims,
**characterized in that**
the 1-alkene with 4 to 8 C atoms is 1-butene, 1-hexene, 1-octene or a mixture thereof.

8. Moulding compound according to one of the previous claims,
**characterized in that**
it contains 0.01 to 60 wt.% of other additives.

9. Moulding compound according to Claim 8,
**characterized in that**
one of the further additives is a copper-containing stabilizer.

10. Moulding compound according to one of Claims 8 and 9,
**characterized in that**
one of the further additives is an oxidation stabilizer.

11. Moulded article produced using the moulding compound according to one of the previous claims.

12. Moulded article according to Claim 11,
**characterized in that**
it is a monolayer pipe or a multilayer pipe.

13. Moulded article according to Claim 11,
**characterized in that**
it is a monolayer container or a multilayer container.

## Revendications

1. Matière à mouler, qui contient à raison d'au moins 40 % en poids les composants suivants :
a) 60 à 99 parties en poids d'un copolyamide partiellement aromatique qui est constitué de motifs répétitifs qui dérivent de
I. 30 à 90 % en moles d'une combinaison d'hexaméthylènediamine et d'acide téréphtalique ainsi que
II. 70 à 10 % en moles d'un lactame et/ou d'un acide ω-aminocarboxylique ayant 11 ou 12 atomes de carbone,
les données en % en moles se rapportant à la somme de I et II et au maximum 20 % de l'hexaméthylènediamine pouvant être remplacés par la quantité équivalente d'une autre diamine et/ou au maximum 20 % de l'acide téréphtalique pouvant être remplacés par la quantité équivalente d'un autre acide dicarboxylique aromatique et/ou d'acide 1,4-cyclohexanedicarboxylique et/ou au maximum 20 % des motifs répétitifs constitués par un lactame et/ou un acide ω-aminocarboxylique ayant 11 ou 12 atomes de carbone pouvant être remplacés par la quantité équivalente de motifs qui dérivent d'une combinaison d'hexaméthylènediamine et d'un acide dicarboxylique aliphatique linéaire ayant de 8 à 19 atomes de carbone et/ou de caprolactame,
b) 40 à 1 parties en poids d'un copolymère oléfinique qui contient les motifs monomères suivants :
- 35 à 94,9 % en poids de motifs monomères à base d'éthène,
- 5 à 65 % en poids de motifs monomères à base d'un 1-alcène ayant de 4 à 8 atomes de carbone,
- 0 à 10 % en poids de motifs monomères à base d'une autre oléfine ainsi que
- 0,1 à 2,5 % en poids de motifs monomères à base d'un anhydride d'acide dicarboxylique à insaturation aliphatique,
les proportions individuelles étant choisies de manière que la somme de ces données en % en poids soit égale à 100
et la somme des parties en poids de a) et b) étant égale à 100.

2. Matière à mouler selon la revendication 1,
**caractérisée en ce que**
le point de fusion de cristallites Tₘ du copolyamide selon ISO 11357, mesuré au 2^{e} chauffage, se situe dans la plage de 240 °C à 300 °C.

3. Matière à mouler selon l'une quelconque des revendications précédentes,
**caractérisée en ce que**
dans le copolyamide partiellement aromatique le rapport des groupes terminaux amino à la somme des groupes terminaux amino et carboxy vaut de 0,3 à 0,7.

4. Matière à mouler selon l'une quelconque des revendications précédentes,
**caractérisée en ce que**
dans le copolymère oléfinique selon b) l'autre oléfine n'est pas un diène non conjugué.

5. Matière à mouler selon l'une quelconque des revendications précédentes,
**caractérisée en ce que**
dans le copolymère oléfinique selon b) l'autre oléfine n'est pas le styrène et/ou pas le propène.

6. Matière à mouler selon l'une quelconque des revendications 1 à 3,
**caractérisée en ce que**
le copolymère oléfinique ne contient que des motifs monomères qui dérivent d'éthène, d'un 1-alcène ayant de 4 à 8 atomes de carbone et d'un anhydride d'acide dicarboxylique à insaturation aliphatique.

7. Matière à mouler selon l'une quelconque des revendications précédentes,
**caractérisée en ce que**
le 1-alcène ayant de 4 à 8 atomes de carbone est le 1-butène, le 1-hexène, le 1-octène ou un mélange de ceux-ci.

8. Matière à mouler selon l'une quelconque des revendications précédentes,
**caractérisée en ce**
**qu'**elle contient 0,01 à 60 % en poids d'autres additifs.

9. Matière à mouler selon la revendication 8,
**caractérisée en ce que**
l'un des autres additifs est un stabilisant contenant du cuivre.

10. Matière à mouler selon l'une quelconque des revendications 8 et 9,
**caractérisée en ce que**
l'un des autres additifs est un stabilisant vis-à-vis de l'oxydation.

11. Pièce moulée, produite avec utilisation de la matière à mouler selon l'une quelconque des revendications précédentes.

12. Pièce moulée selon la revendication 11,
**caractérisée en ce**
**qu'**elle est un tube monocouche ou un tube multicouche.

13. Pièce moulée selon la revendication 11,
**caractérisée en ce**
**qu'**elle est un récipient monocouche ou un récipient multicouche.
